# FASCICULE DE BREVET EUROPEEN

(11) **EP 2 898 358 B1**
(45) Date de publication et mention de la délivrance du brevet: **19.08.2020**
(21) Numéro de dépôt: 13773192.3
(22) Date de dépôt: 20.09.2013
(51) Int. Cl.: G02B 6/032, H01S 3/30, G02B 6/36, G02B 6/38

(54) **DISPOSITIF OPTIQUE À FIBRE OPTIQUE À COEUR LIQUIDE ET PROCÉDÉ DE RÉALISATION D'UN TEL DISPOSITIF**
VORRICHTUNG MIT EINEM FLÜSSIGEN KERN UMFASSENDEN LICHTWELLENLEITER UND VERWANDTES FERTIGUNGSVERFAHREN
LIQUID CORE OPTICAL FIBRE DEVICE AND RELATED MANUFACTURING PROCESS

(30) Priorité: 21.09.2012 FR 1258870
(43) Date de publication de la demande: 29.07.2015
(73) Titulaire: Centre National de la Recherche Scientifique (C.N.R.S.), 75794 Paris Cedex 16 (FR)
(72) Inventeur: PHAN HUY, Minh Châu, F-91300 Massy (FR); DELAYE, Philippe, F-75010 Paris (FR); LEBRUN, Sylvie, F-91400 Gometz-La-Ville (FR); PAULIAT, Gilles, F-91460 Marcoussis (FR)
(74) Mandataire: Priori, Enrico
(86) Numéro de dépôt international: PCT/EP2013/069638
(87) Numéro de publication internationale: WO 2014/044829

(56) Documents cités:
- WO-A2-2011/115933
- DE-A1- 2 433 219
- JP-A- S62 157 013
- US-A- 4 045 119
- US-A- 5 604 587
- IPPEN E P: "LOW-POWER QUASI-cw RAMAN OSCILLATOR", APPLIED PHYSICS LETTERS,, vol. 16, no. 8, 15 avril 1970 (1970-04-15) , pages 303-305, XP001617673,

## Description

La présente invention concerne les connecteurs et techniques de connexion pour fibre optique, et plus spécifiquement les connecteurs et techniques de connexion pour fibre optique à cœur liquide.

Les guides de lumière et fibres optiques à cœur liquide font l'objet d'une attention soutenue en recherche-développement depuis plusieurs décennies, étant donnés les avantages qu'ils procurent dans un champ d'applications qui ne cesse de s'étendre.

On connait en particulier différentes applications des fibres optiques à cœur creux empli de liquide, applications qui dépendent généralement des particularités des liquides employés pour emplir le cœur de fibre, et des propriétés spécifiques des fibres utilisées. Par exemple, les fibres à cœur liquide sont utilisées pour observer et étudier l'effet Raman produit à une extrémité de la fibre lorsqu'on excite le matériau emplissant le cœur de fibre par une source laser couplée à l'autre extrémité de celle-ci. De tels montages nécessitent de disposer de coupleurs (ou connecteurs) d'entrée et de sortie de la fibre permettant le passage optique afin de pouvoir injecter dans la fibre le signal d'excitation émis par la source laser, et en sortie de fibre d'analyser les propriétés du signal.

Un exemple de procédé utilisant une fibre à cœur liquide comme cellule contenant le liquide à analyser pour effectuer une analyse de spectroscopie Raman est décrit dans le brevet américain n° 3,770,350. L'application décrite nécessite de remplir la fibre avec le liquide et de coupler la lumière dans la fibre afin de pratiquer l'analyse souhaitée, ce qui suppose de remplir la fibre avec un liquide de manière non définitive, et de pouvoir changer le liquide introduit dans la fibre.

En outre, des fibres optiques dites « microstructurées » (ou parfois dites « fibres à cristal photonique ») ont été développées depuis quelques années pour une variété d'applications (télécommunications, optique non linéaire, etc.) et présentent des performances si intéressantes que leur utilisation se généralise rapidement. Une fibre microstructurée est une fibre présentant des microstructures sous forme de cavités s'étendant sur la longueur de la fibre, et dont la coupe transversale forme une matrice de cavités définissant la microstructure. Différents exemples de fibres microstructurées sont décrits dans le brevet américain n° 7,062,140.

Les fibres microstructurées peuvent aussi être employées dans des applications où on emplit leurs cavités formant la microstructure de liquide, pour avoir accès aux applications mentionnées ci-dessus. On parle alors de « fibres microstructurées à cœur liquide » ou bien de « fibres à cœur liquide », cette désignation s'appliquant de manière générale aux fibres dont les cavités formant la microstructure sont remplies de liquide, sans que ces cavités remplies de liquide soient nécessairement exclusivement situées au cœur ou dans la partie centrale de la coupe transversale de la fibre. A titre d'exemple, on considère ainsi dans le présent document qu'une fibre dont la partie centrale de coupe transversale ainsi qu'une partie de la gaine entourant cette partie centrale sont percées par des cavités, les cavités étant remplies de liquide (ou destinées à l'être), est une fibre à cœur liquide.

Dans le cas d'une application faisant intervenir des fibres à cœur liquide, on est amené à considérer l'usage de connecteurs d'entrée et sortie de fibre qui soient aussi opérationnels pour des fibres à cœur liquide.

Différentes techniques ont ainsi été développées pour fermer une extrémité de fibre à cœur liquide, au moyen ou non d'un dispositif coupleur.

L'utilisation d'une soudeuse de fibre pour sceller l'extrémité d'une fibre n'est pas satisfaisante lorsqu'on considère une fibre à cœur liquide, du fait des pertes de couplage résultant de l'opération de scellement d'extrémité. En outre, le scellement des deux extrémités d'une fibre à cœur liquide s'avère particulièrement difficile, si l'on souhaite conserver une qualité satisfaisante de faisceau optique traversant la fibre.

On est donc amené à considérer l'utilisation de connecteurs (ou coupleurs), montés à chaque extrémité d'une fibre optique à cœur liquide. Les dispositifs existants ne répondent cependant pas ou seulement partiellement à un ensemble de contraintes qui s'imposent pour pouvoir tirer parti de la variété d'applications auxquelles se prête la fibre optique à cœur liquide.

Parmi ces contraintes, on peut par exemple citer la nécessité comme indiqué ci-dessus de pouvoir remplir la fibre avec un liquide de manière non définitive, et de pouvoir changer le liquide introduit dans la fibre, tout en conciliant cet avantage avec la nécessité d'effectuer un couplage étanche et pérenne entre la fibre optique et le connecteur. Cette dernière contrainte est liée à la nécessité d'éviter l'évaporation du liquide et le vidage de la fibre.

En outre, les dispositifs fibre à cœur liquide/connecteur, une fois montés, doivent pouvoir supporter les variations de température liées aux conditions d'utilisation ou à des variations de température de stockage du dispositif. Ces variations de températures génèrent des risques auxquels les dispositifs existants ne sont pas adaptés. Par exemple, lors d'une baisse de température, le fait d'utiliser des liquides ayant un coefficient de dilatation supérieur à celui de la fibre résultera en une baisse de pression du liquide se traduisant par la création de bulles dans le cœur de la fibre qui gêneront voire empêcheront la propagation de la lumière dans la fibre. A l'opposé, une augmentation de température entrainera une surpression dans le liquide, qui pourra rapidement devenir importante et engendrer dans le dispositif des contraintes qui pourront devenir dangereuses pour les éléments collés du dispositif voire pour la fibre elle-même, et induire des fuites voire une rupture de l'ensemble.

En outre, les dispositifs fibre à cœur liquide/connecteur, une fois montés, doivent pouvoir supporter les vibrations et les changements d'orientation, tels que les retournements, subis lors de leur manipulation et lors de leur transport, par la poste par exemple.

Le document US4045119 décrit un guide d'onde flexible à cœur liquide utilisant un tube de plusieurs millimètres de diamètre dont la fermeture se fait à une extrémité par des blocs de verre vissés ou sertis dans le tube, et à l'autre extrémité par un dispositif permettant le remplissage et le couplage optique.

Un but de la présente invention est d'apporter une solution aux défauts des dispositifs connecteurs pour fibre optique exposés ci-dessus.

L'invention propose ainsi un dispositif optique à fibre optique à coeur liquide selon la revendication 1, le dispositif de connexion étant également appelé connecteur dans la présente description.

L'incorporation lors du montage du dispositif d'une bulle de gaz répond avantageusement à la contrainte des variations de température, la bulle de gaz étant capable en changeant de volume (le gaz étant compressible) d'encaisser les variations de pression induites dans le liquide par les variations de température, et ce, quelle que soit la nature du liquide de la fibre optique à cœur liquide et celle du matériau utilisé pour la gaine de ladite fibre.

Du fait des retournements, changements d'orientation et vibrations subis lors des manipulations et transport du dispositif à fibre optique à cœur liquide, la bulle peut être amenée à se déplacer dans le dispositif de connexion.

Selon une variante, la fibre optique est insérée dans le manchon sur une longueur supérieure à celle du premier conduit, de manière à traverser le premier conduit et à pénétrer dans le deuxième conduit, sans entrer en contact avec le dispositif de fermeture du dispositif de connexion.

Le volume de la bulle peut être par ailleurs avantageusement ajusté entre un volume minimal et un volume maximal, tels que la bulle ne puisse pas se mettre en bout de fibre, afin d'éviter qu'elle ne rentre dans la fibre et/ou qu'elle ne perturbe le trajet des faisceaux.

Ainsi, selon une variante, la bulle de gaz est telle que son diamètre reste supérieur à la distance entre l'extrémité de la fibre optique insérée dans le canal du manchon et le dispositif de fermeture du dispositif de connexion dans toute la gamme de température de fonctionnement, de transport et de stockage envisagée.

Dans un mode de réalisation particulier du dispositif à fibre optique à cœur liquide, le volume de la bulle de gaz est tel que son diamètre reste inférieur à la distance séparant la fibre de la paroi du deuxième conduit dans laquelle le troisième conduit est débouchant, et ce dans toute la gamme de température de fonctionnement, de transport et de stockage envisagée. Ainsi, lors des changements d'orientation du manchon, la bulle reste approximativement sphérique sous l'action de la tension superficielle et ne recouvre pas l'extrémité de la fibre, conformément à l'invention.

Dans un mode de réalisation, les moyens de fermeture comprennent une fenêtre fermant hermétiquement le manchon à son extrémité correspondant au deuxième conduit, la fenêtre permettant un couplage optique.

La fenêtre permet de pouvoir accéder optiquement aux faces d'entrée et de sortie de la fibre, une fois celle-ci montée sur un dispositif de connexion selon ce mode de réalisation à chacune de ses extrémités, et ainsi de pouvoir envoyer un faisceau optique dans la fibre et récupérer le faisceau transmis et généré par cette dernière.

Dans un autre mode de réalisation, les moyens de fermeture comprennent un quatrième conduit superposé en communication avec le deuxième conduit dans le canal du manchon, formé à partir de l'autre extrémité du manchon et agencé pour recevoir de façon hermétique à l'extrémité correspondante du manchon une extrémité d'une fibre optique, dans lequel les premier et quatrième conduits sont coaxiaux, et dans lequel les moyens de fermeture comprennent en outre une extrémité de fibre optique insérée dans le quatrième conduit de façon hermétique.

Il est ainsi prévu dans ce mode de réalisation, de connecter deux extrémités de fibre optique, respectivement à chacune des extrémités du manchon du dispositif de connexion, sans qu'il soit nécessaire de connecter au dispositif de connexion deux fibres optiques à cœur liquide. On peut en effet envisager la connexion d'une fibre d'accès (non nécessairement à cœur liquide) à une extrémité d'un dispositif de connexion selon cet autre mode de réalisation, générant un faisceau optique vers une fibre à cœur liquide, connectée à l'autre extrémité du dispositif de connexion.

L'accès à la face d'une fibre optique à cœur liquide peut donc être direct, en utilisant des faisceaux en espace libre avec des optiques de couplage (dispositif de connexion à fenêtre), ou en utilisant un couplage par fibre en amenant une fibre d'accès quasiment en contact avec la fibre à cœur liquide.

On peut par ailleurs prévoir d'adjoindre au dispositif une ferrule, c'est-à-dire un tube rigide, de préférence de longueur correspondant à la longueur du premier conduit du manchon, présentant sur toute sa longueur un canal agencé pour recevoir de façon hermétique, une extrémité de la fibre optique. Dans cette configuration, le premier conduit est agencé pour recevoir la ferrule de façon hermétique à l'extrémité correspondante du manchon.

Dans un mode particulier de réalisation, les premier et second conduits sont coaxiaux et de même diamètre, et la ferrule a un diamètre correspondant à celui des premier et second conduits pour être insérée de façon hermétique sur toute sa longueur dans le premier conduit.

Un autre aspect de la présente invention se rapporte à un procédé de connexion d'une fibre optique à cœur liquide à un dispositif de connexion tel que proposé, comprenant l'insertion d'une extrémité de la fibre optique de façon hermétique dans le premier conduit du manchon du dispositif de connexion sur une longueur inférieure à la longueur cumulée des premier et deuxième conduits, le remplissage du volume intérieur du manchon du dispositif de connexion constitué par les deuxième et troisième conduits par l'orifice externe du troisième conduit avec un liquide prévu pour remplir le cœur de la fibre optique, et la fermeture après remplissage de l'orifice du troisième conduit de manière à injecter dans le volume intérieur une bulle de gaz.

Dans un mode de réalisation particulier du procédé proposé, le remplissage du volume intérieur du manchon du dispositif de connexion est partiel, et l'injection de la bulle de gaz est effectuée par fermeture de l'orifice externe du troisième conduit avec le bouchon de fermeture.

En outre, on peut alors déterminer un niveau de remplissage partiel du volume intérieur du manchon du dispositif de connexion, et utiliser un bouchon de fermeture de longueur prédéterminée d'obturation du troisième conduit de manière à injecter dans le volume intérieur, lors de la fermeture de l'orifice externe du troisième conduit avec le bouchon de fermeture, une bulle de gaz de volume prédéterminé.

En variante, on peut effectuer le remplissage partiel du volume intérieur du dispositif de connexion jusqu'à un niveau prédéterminé correspondant à un volume prédéterminé de la bulle de gaz injectée dans le volume intérieur lors de la fermeture de l'orifice externe du troisième conduit.

Dans un mode de réalisation particulier du procédé proposé, la fibre optique est insérée dans le manchon sur une longueur supérieure à celle du premier conduit, de manière à traverser le premier conduit et à pénétrer dans le deuxième conduit, sans entrer en contact avec le dispositif de fermeture du dispositif de connexion.

Dans un mode de réalisation particulier du procédé proposé, l'injection de la bulle de gaz est effectuée de manière à injecter une bulle de gaz dont le diamètre reste supérieur à la distance entre l'extrémité de la fibre optique insérée dans le canal du manchon et le dispositif de fermeture du dispositif de connexion, dans toute la gamme de température de fonctionnement, de transport et de stockage envisagée.

Dans un mode de réalisation particulier du procédé proposé, l'injection de la bulle de gaz est effectuée de manière à injecter une bulle de gaz dont le diamètre reste inférieur à la distance séparant la fibre de la paroi du deuxième conduit dans laquelle le troisième conduit est débouchant, et ce dans toute la gamme de température de fonctionnement, de transport et de stockage envisagée.

Le procédé proposé et le dispositif optique associé ont l'avantage de permettre la réalisation de connecteurs qui peuvent être miniaturisés et facilement transportables, permettant de remplir une fibre à cœur liquide et contenir de manière étanche et pérenne ce liquide dans la fibre, tout en autorisant un couplage optique aisé à la fibre.

Par ailleurs, la réalisation de dispositifs de mise en œuvre de certaines applications des fibres optiques à cœur liquide, microstructurées ou non, nécessitent de remplir la fibre avec le liquide choisi, puis de conserver ce liquide dans la fibre de manière étanche et pérenne (en s'affranchissant notamment des contraintes liées aux variations de température), tout en assurant un bon couplage optique en entrée et en sortie avec des sources lasers ou des systèmes de détection, cela en étant le plus compact possible. Le procédé et le connecteur proposés répondent à ces exigences, en permettant le remplissage de la totalité de la fibre avec le liquide choisi, de confiner le liquide dans le cœur de la fibre, et d'assurer la pérennité du système, notamment eu égard aux variations de température auquel le dispositif peut être soumis, au moyen de l'insertion de manière contrôlée à l'intérieur du connecteur d'une microbulle de gaz.

D'autres particularités, caractéristiques et avantages de la présente invention apparaîtront dans la description ci-après d'exemples de réalisation non limitatifs, en référence aux dessins annexés, dans lesquels :
- la figure 1a représente une vue en coupe d'un connecteur selon un premier mode de réalisation ;
- la figure 1b représente une vue en coupe d'un connecteur couplé à une fibre optique à cœur creux selon un premier mode de réalisation ;
- la figure 1c représente une vue en coupe d'un connecteur couplé à une fibre optique à cœur creux selon un premier mode de réalisation pendant la phase de remplissage ;
- la figure 1d représente une vue en coupe d'un connecteur couplé à une fibre optique à cœur creux selon un premier mode de réalisation ;
- la figure 2 représente une vue en coupe d'une portion de connecteur couplé à une fibre optique à cœur creux selon un premier mode de réalisation ;
- la figure 3a représente une vue en coupe d'un connecteur selon un deuxième mode de réalisation ;
- la figure 3b représente une vue en coupe d'un connecteur couplé à une fibre optique à cœur creux selon un deuxième mode de réalisation ;
- la figure 4a représente une vue en coupe d'un connecteur selon un troisième mode de réalisation ;
- la figure 4b représente une vue en coupe d'un connecteur couplé à deux fibres optiques, dont l'une est à cœur creux selon un troisième mode de réalisation ;
- la figure 5 représente une vue en coupe d'une fibre optique à cœur liquide couplée à deux connecteurs.

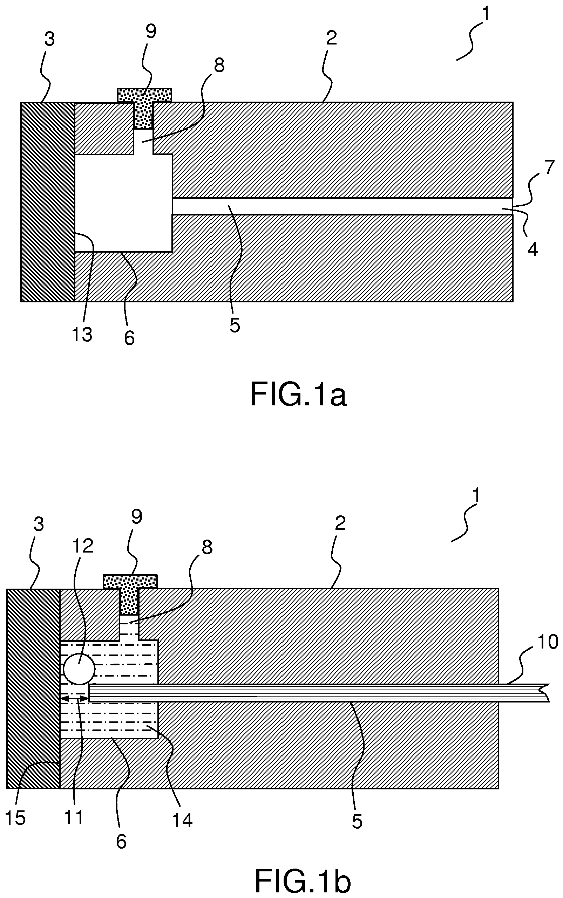

La figure 1a illustre une mise en œuvre du dispositif de connexion pour fibre optique à cœur liquide proposé selon un premier mode de réalisation.

En référence à la figure 1a, le connecteur 1 proposé peut comprendre un manchon 2 et une fenêtre 3. Le manchon 2 présente une structure tubulaire comprenant un canal 4 traversant dans le sens de la longueur et résultant de deux conduits 5 et 6 formés à l'intérieur du manchon, de sections différentes et superposés de manière à être communicants et former le canal traversant le manchon. Une première extrémité du canal 4 est formée à une première extrémité 7 du manchon 2, et correspond à un premier conduit 5, tandis que la deuxième extrémité du canal 4 est formée à l'autre extrémité du manchon 2 (pris dans le sens de la longueur) et correspond à un deuxième conduit 6, de section supérieure à celle du premier conduit 5.

Le premier conduit 5 peut être formé et/ou dimensionné de manière à pouvoir y insérer une extrémité de la fibre optique à laquelle il est prévu de coupler le connecteur 1, introduite par l'extrémité 7 correspondante du manchon 2 sur sensiblement toute la longueur du conduit 5. Lorsque la fibre optique est couplée au connecteur 1, son extrémité est insérée dans la longueur du premier conduit de façon hermétique, c'est-à-dire que l'espace entre l'enveloppe externe de la fibre et les parois du conduit 5 est hermétiquement clos. Ce couplage hermétique entre la fibre (non représentée sur la figure) et le premier conduit 5 du canal 4 peut être réalisé par tous moyens connus, et notamment par collage par tous moyens connus, par exemple par collage de l'enveloppe externe de la fibre aux parois du conduit 5) par passage dans une étuve.

Avantageusement, la longueur du premier conduit est dimensionnée de manière à guider la fibre lors de son insertion et minimiser les déplacements transversaux et angulaires de l'extrémité de la fibre lors de sa fixation. Pour un diamètre de fibre standard (typiquement entre 100 et 200 µm) cette longueur est par exemple supérieure ou égale à 5mm, typiquement autour de 10 mm, par exemple entre 5 et 15 mm.

La forme de section du deuxième conduit 6 peut être circulaire ou bien correspondre à toute forme de courbe fermée (triangulaire, carrée, rectangulaire, etc.). Ces variantes de forme de section de conduit sont valables pour tous les exemples de réalisation décrits ci-après. Il en est de même pour le premier conduit 5, à ceci près que, ce conduit étant prévu pour qu'y soit insérée la fibre optique à coupler au connecteur 1, on pourra privilégier, pour la section du premier conduit 5, une dimension et une forme correspondant aux dimension et forme de l'enveloppe externe de la fibre optique que l'on souhaite monter sur le connecteur, étant entendu que la fibre doit pouvoir être insérée puis couplée de façon hermétique au premier conduit 5.

On pourrait en variante de la structure illustrée sur la figure 1a envisager la présence d'un ou de plusieurs autres conduits superposés en communication pour former le canal 4, sans pour autant sortir du cadre de ce premier mode de réalisation. Par exemple, on pourrait envisager un conduit intermédiaire entre les premier 5 et deuxième 6 conduits pour la mise en œuvre du dispositif de connexion proposé selon ce mode de réalisation.

Le volume interne du manchon 2 défini par le deuxième conduit 6 est clos à l'extrémité correspondante du manchon par une fenêtre 3 qui assure l'étanchéité du montage et qui permet d'injecter (dans le connecteur, et donc vers la fibre lorsqu'elle est montée sur le connecteur) un faisceau laser focalisé. La fenêtre 3 peut être fixée hermétiquement au manchon par collage ou, en variante, par tous moyens de fixation hermétique connus en soi. La fenêtre 3 forme ainsi un moyen de fermeture hermétique de l'extrémité du deuxième conduit 6 opposée à celle communiquant avec le premier conduit 5, et est transparente de manière à permettre un couplage optique avec la fibre insérée dans le connecteur 1.

Différents matériaux transparents et formes peuvent convenir pour la fenêtre (3). Celle-ci peut par exemple être en verre, ou bien en saphir. Elle peut avoir la forme d'une plaque, par exemple de 2 mm d'épaisseur, ou être formée comme une lentille. Ce dernier cas présente l'avantage de permettre de focaliser vers l'extrémité de fibre couplée au connecteur un faisceau lumineux injecté de l'extérieur du connecteur. Lorsque la fenêtre est une plaque de verre, on peut utiliser une lentille agencée et disposée de manière à focaliser un faisceau lumineux injecté de l'extérieur du connecteur vers l'extrémité de fibre optique couplée au connecteur. L'utilisation d'une fenêtre qui est elle-même une lentille permet de remplir cette fonction de focalisation d'un faisceau vers l'extrémité de fibre optique couplée au connecteur. On pourra d'ailleurs avantageusement utiliser une fenêtre lentille à gradient d'indice, de manière à accroître la facilité d'emploi du connecteur, du fait de la flexibilité de positionnement du plan focal pour une lentille à gradient d'indice. En outre, l'épaisseur de la fenêtre 3 peut être choisie plus fine que 2 mm, par exemple pour répondre à des contraintes spécifiques en termes de couplage optique.

La paroi du manchon est percée au-dessus du volume interne défini par le deuxième conduit, sur toute son épaisseur, de sorte que le manchon présente en surface un orifice par lequel on peut remplir le connecteur une fois la fibre optique montée. Le manchon présente ainsi un troisième conduit 8 percé transversalement, qui s'étend de la paroi extérieure du manchon à la paroi du deuxième conduit à l'intérieur du manchon. Ce troisième conduit 8 est prévu comme conduit de remplissage du volume interne du connecteur 1 et du cœur de fibre optique une fois celle-ci montée dans le connecteur 1. On prévoit en outre de clore hermétiquement l'orifice externe de ce troisième conduit 8, prévu pour remplir la fonction d'orifice de remplissage, par un bouchon 9, afin de le fermer une fois la phase de remplissage du connecteur terminée. Pour assurer une bonne étanchéité de la fermeture avec le bouchon, on peut prévoir un méplat réalisé sur la paroi externe du manchon au niveau de l'orifice de remplissage, dans le cas d'un manchon de coupe transversale incurvée au niveau de cet orifice.

En référence à la figure 1b, la fibre optique 10 est insérée dans le premier conduit 5 du connecteur 1 représenté sur la figure 1a. Le couplage entre l'enveloppe externe de la fibre optique et le premier conduit 5 est hermétique, de même que celui entre la fenêtre 3 et la surface annulaire 1) d'extrémité du manchon correspondant au deuxième conduit. Ainsi, le volume défini à l'intérieur du manchon par les deuxième et troisième conduits 6 et 8 est hermétiquement clos, lorsque le bouchon 9 de fermeture hermétique du troisième conduit 8 est en place.

Dans l'exemple non limitatif de la figure 1b, la fibre optique 10 est insérée dans le premier conduit 5 sur une longueur excédant celle du premier conduit 5, avant d'effectuer le couplage hermétique entre la fibre 10 et le premier conduit 5. Dans cette configuration, l'extrémité de fibre optique 10 se trouve dans le volume interne du manchon défini par le deuxième conduit 6, et non pas coïncidant avec l'extrémité du premier conduit 5 débouchant sur le deuxième conduit 6. La fibre 10 insérée dans le connecteur 1 est insérée sur une longueur n'excédant pas la longueur cumulée des premier et deuxième conduits, de sorte que l'extrémité de la fibre 10 insérée dans le connecteur 1 n'est pas en contact avec la paroi interne au connecteur de la fenêtre 3. Cela définit un espace 11, auquel il est ici fait référence sous le terme « interstice », dans le volume défini par le deuxième conduit, entre l'extrémité de la fibre 10 et la portion de surface de la paroi interne de la fenêtre 3 y faisant face.

Une fois la fibre montée, c'est-à-dire une fois insérée dans le premier conduit et le deuxième conduit à la longueur souhaitée, on peut effectuer le remplissage du connecteur 1 avec le liquide 14 souhaité. Le bouchon 9 est retiré, et on remplit par l'orifice de remplissage le volume défini par les deuxième et troisième conduits 6 et 8. En fin de remplissage du connecteur, on injecte une bulle 12 de gaz puis on referme l'orifice de remplissage à l'aide du bouchon 9.

Dans un mode de réalisation préféré du procédé proposé de connexion d'une fibre à un connecteur, le remplissage du volume intérieur défini par les deuxième et troisième conduits n'est que partiel, et l'injection de la bulle de gaz dans le connecteur s'effectue avec la fermeture de l'orifice externe du troisième conduit par le bouchon 9. Dans ce mode de réalisation, le remplissage partiel est adapté à la dimension du bouchon 9, en ce sens qu'il est tenu compte de la longueur d'obturation du troisième conduit 8 par le bouchon 9 lorsque ce dernier est positionné pour fermer le conduit.

Il est aussi possible, en option, de choisir les dimensions du bouchon 9, et plus particulièrement sa longueur, de manière à contrôler le volume, étant donné un niveau de remplissage partiel prédéterminé, de la bulle 12 de gaz injectée lors de la fermeture du bouchon 9.

Avantageusement, le troisième conduit présente une section circulaire dont les dimensions sont plus petites que la plus petite dimension des dimensions du deuxième conduit, c'est-à-dire les dimensions de sa section ou de sa longueur. Avantageusement, le diamètre du troisième conduit est avantageusement inférieur à la moitié de la plus petite dimension du deuxième conduit. Cette configuration permet notamment de faciliter la réalisation du troisième conduit et d'assurer une meilleure étanchéité du dispositif.

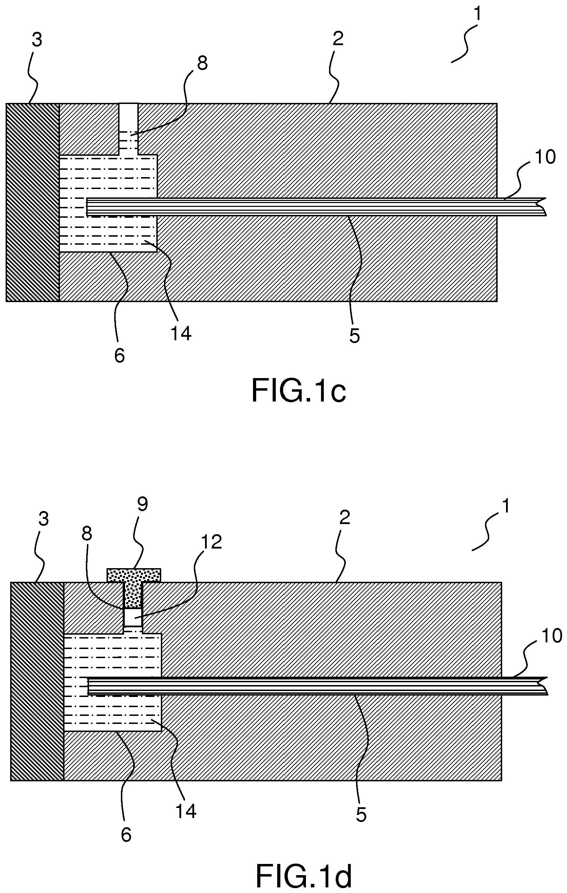

En référence à la figure 1c, les volumes respectivement définis par les deuxième et troisième conduits communiquent. Le remplissage du volume total défini par les deuxième et troisième conduits a été contrôlé de manière à ce que le volume défini par le deuxième conduit soit entièrement rempli de liquide 14, tandis que le volume défini par le troisième conduit n'est que partiellement rempli de liquide 14. Dans la configuration représentée à la figure 1c, le troisième conduit (de remplissage) est positionné sur la partie supérieure du connecteur 1 de sorte qu'il se trouve au-dessus du deuxième conduit 6. Lorsqu'on injecte du liquide de remplissage par l'orifice externe du troisième conduit 8, le liquide 14 remplit tout d'abord la partie inférieure du volume défini par le deuxième conduit 6, puis par capillarité le cœur de fibre 10 en chassant l'air présent dans le cœur de la fibre par l'autre extrémité de cette dernière, avant de remplir la partie supérieure du deuxième conduit 6 puis le troisième conduit 8. En variante à ce qui est représenté sur la figure 1c, on peut ne remplir que partiellement le volume défini par le deuxième conduit (auquel cas, dans la configuration représentée, le troisième conduit n'est pas du tout rempli de liquide). En référence à la figure 1d, la longueur d'obturation du bouchon 9 étant inférieure à celle du troisième conduit 8 de remplissage, on injecte une bulle 12 d'air (ou de gaz ambiant) en repositionnant le bouchon 9 une fois le remplissage partiel effectué.

En référence à la figure 1b, le matériau utilisé pour le bouchon 9 sera choisi résistant au liquide utilisé. Le téflon est un exemple de matériau utilisable pour le bouchon 9 et qui résiste bien pour des liquides comme le méthanol, l'éthanol, l'acétone, le benzène, le nitrobenzène, le toluène ou le xylène.

Le bouchon 9, tout en fermant le connecteur de manière étanche, est amovible et peut être retiré afin par exemple de changer de liquide. Dans une variante de réalisation dans laquelle on souhaite sceller de manière définitive le connecteur, le bouchon 9 est collé, l'ensemble du montage pouvant en outre être protégé par une gaine, par exemple de type thermorétractable.

Dans un mode de réalisation préféré, la taille de la bulle injectée dans le connecteur est choisie de manière à compenser les variations de pression induites lors de cycles de température. Plus spécifiquement, la taille de la bulle est choisie de sorte que lors de cycles de variation de température, la bulle ne disparaisse pas et ne se fragmente pas. Par exemple, lors d'un cycle de température incluant un réchauffement suivi d'un refroidissement, la disparition de la bulle durant le réchauffement de température autour du connecteur serait suivi de la création d'une autre bulle pendant la phase de refroidissement, à une position dans l'ensemble connecteur-fibre qui n'est pas contrôlée.

Dans un mode de réalisation préféré, la taille minimale de la bulle est en outre choisie de manière à assurer que la bulle ne vienne pas se coincer devant la fibre ce qui pourrait avoir pour conséquence d'injecter du gaz dans le cœur de la fibre et perturber la propagation de la lumière dans cette dernière.

Selon l'invention, la taille maximale de la bulle est en outre choisie de manière telle que lors des changements d'orientation du manchon, elle reste approximativement sphérique sous l'action de la tension superficielle et ne puisse pas recouvrir l'extrémité de la fibre.

Typiquement, son diamètre reste inférieur à la distance séparant la fibre optique de la paroi du deuxième conduit dans laquelle le troisième conduit est débouchant.

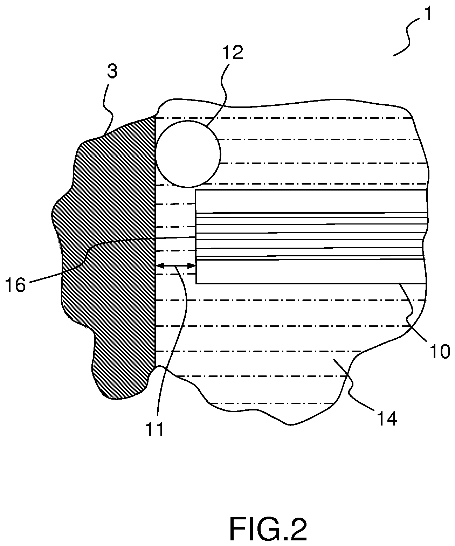

En référence à la figure 2, la bulle 12 a un diamètre supérieur à l'interstice 11, c'est-à-dire à la distance entre le bout 16 de la fibre 10 et la paroi interne au connecteur de la fenêtre 3 du connecteur. La bulle 12 peut néanmoins se déplacer dans le volume défini par le deuxième conduit qui est, à l'exception de la bulle 12 elle-même, empli de liquide 14. Compte tenu des tensions de surface, des angles d'accrochage et des forces de capillarité, la bulle 12 ne pourra pas se localiser vers le cœur de la fibre 10 si son diamètre est supérieur à l'interstice 11.

Le diamètre initial de la bulle 12 (lors de son injection dans le connecteur 1) est donc choisi, dans un mode de réalisation préféré, de manière à ce que lors de la totalité des cycles de température prévisibles lors de l'utilisation souhaitée du connecteur 1, il reste supérieur à la valeur de l'interstice obtenu lors du montage de la fibre 10 dans le connecteur 1. Autrement dit, la taille minimale de la bulle 12 correspondant au rétrécissement maximum subi par la bulle 12 lors du maximum de température auquel le connecteur est soumis, doit être supérieure à la longueur de l'interstice mesurée sur le connecteur une fois la fibre 10 montée. On peut aussi monter la fibre dans le connecteur de manière à ce que l'interstice laissé entre la fenêtre 3 et l'extrémité de la fibre 10 soit suffisamment petit, pour éviter que la bulle 12 ne s'insère entre la fibre 10 et la fenêtre 3, et ce même après une variation importante de température.

En référence aux figures 1b et 2, on pourra par exemple s'assurer que la taille de l'interstice n'excède pas une centaine de micromètres. Et dans le cas d'un interstice de l'ordre d'une centaine de micromètres, on pourra par exemple injecter dans le connecteur une bulle d'un diamètre minimal de l'ordre de deux cents micromètres, de manière à éviter les inconvénients énoncés ci-dessus.

Toujours dans l'exemple d'un interstice de l'ordre d'une centaine de micromètres, si le diamètre de la bulle est de l'ordre de 2mm et le volume total de liquide dans la fibre et dans le connecteur est inférieur à 20 µl, la bulle 12 possèdera toujours un diamètre supérieur à 100 µm, quand bien même la température à laquelle est soumis le connecteur augmenterait de 40° C, et ce pour un liquide comme l'éthanol qui a un fort coefficient de dilatation. La tension superficielle empêchera alors la bulle de s'insérer entre la fenêtre 3 et la fibre 10.

Par ailleurs, on pourra par exemple choisir pour ce premier mode de réalisation un manchon 2 en verre, en métal ou en céramique, de longueur inférieure ou égale à 2 cm et de diamètre externe inférieur ou égal à 1 cm, typiquement une longueur de 1cm pour 4mm de diamètre externe.

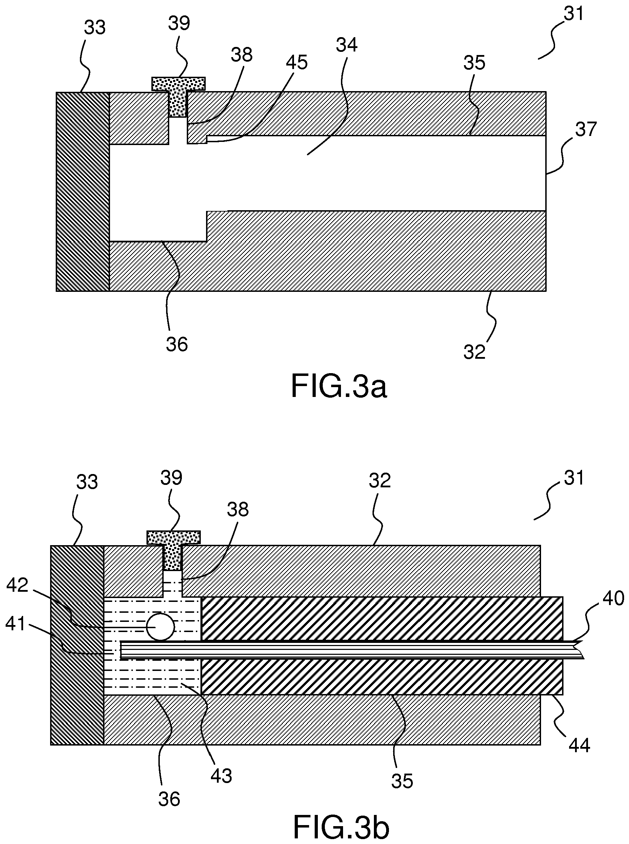

Les figures 3a et 3b illustrent une mise en œuvre du connecteur proposé selon un deuxième mode de réalisation.

Le connecteur représenté aux figures 3a et 3b diffère de celui représenté aux figures 1a et 1b en ce qu'il comprend une ferrule dans laquelle la fibre est insérée et qui est elle-même insérée dans le premier conduit du manchon (qui, de fait, est plus large que celui du connecteur représenté aux figures 1a et 1b).

En référence à la figure 3a, le connecteur 31 proposé peut comprendre un manchon 32 et une fenêtre 33. Le manchon 32 présente une structure tubulaire comprenant un canal 34 traversant dans le sens de la longueur et résultant de deux conduits 35 et 36 formés à l'intérieur du manchon, de sections non nécessairement différentes et superposés de manière à être communicants et former le canal 34 traversant le manchon 32. Le connecteur 31 représenté sur la figure 3b présente des premier 35 et deuxième 36 conduits coaxiaux et de même section, mais on peut en variante réaliser un connecteur dans lequel les premier 35 et deuxième 36 conduits ne sont ni coaxiaux ni de même section, comme illustré à la figure 3a. Une première extrémité du canal 34 est formée à une première extrémité 37 du manchon 32, et correspond à un premier conduit 35, tandis que la deuxième extrémité du canal 34 est formée à l'autre extrémité du manchon 32 (pris dans le sens de la longueur) et correspond à un deuxième conduit 36, de section supérieure à celle du premier conduit 35.

Le premier conduit 35 est dimensionné de manière à pouvoir y insérer une ferrule (non représentée sur la figure), dans laquelle l'extrémité d'une fibre optique (non représentée sur la figure) a été insérée, de manière à coupler la fibre optique au connecteur 31. Une fois la fibre optique montée sur la ferrule, la ferrule est introduite par l'extrémité 37 correspondante du manchon 32 sur sensiblement toute la longueur du premier conduit 35. De préférence, le manchon est en effet prévu d'une longueur supérieure ou égale à celle du premier conduit 35 du manchon 32. Dans ce mode de réalisation, le connecteur 31 comprend une ferrule utilisée pour coupler la fibre optique au connecteur 31.

De manière similaire à ce qui a été décrit précédemment pour le premier mode de réalisation, la paroi du manchon 32 est percée au-dessus du volume interne défini par le deuxième conduit 36, sur toute son épaisseur, de sorte que le manchon 32 présente en surface un orifice par lequel on peut remplir le connecteur 31 une fois la fibre optique montée. Le manchon 32 présente ainsi un troisième conduit 38 (qui n'est pas partie constituante du canal 34 traversant le manchon) percé transversalement, qui s'étend de la paroi extérieure du manchon 32 à la paroi du deuxième conduit 36 à l'intérieur du manchon 32. Ce troisième conduit 38 est prévu comme conduit de remplissage du volume interne du connecteur 31 et du cœur de fibre optique une fois celle-ci montée dans le premier conduit 35 du connecteur 31. On prévoit en outre de clore hermétiquement l'orifice externe de ce troisième conduit 38, prévu pour remplir la fonction d'orifice de remplissage, par un bouchon 39, afin de le fermer une fois la phase de remplissage du connecteur terminée. Pour assurer une bonne étanchéité de la fermeture avec le bouchon, on peut prévoir un méplat réalisé sur la paroi externe du manchon au niveau de l'orifice de remplissage, dans le cas d'un manchon de coupe transversale incurvée au niveau de cet orifice.

La ferrule présente un canal sur toute sa longueur, destiné à accueillir la fibre optique de façon hermétique. On réalise ensuite un couplage hermétique entre la fibre, insérée dans le canal de la ferrule, et la ferrule, par tous moyens connus. Dans un exemple de réalisation préféré, l'extrémité de la fibre optique est préalablement insérée dans le canal de la ferrule qui est adapté à son diamètre extérieur, puis la fibre est collée dans la ferrule. Il sera pris soin pour cette opération de veiller à ce que la colle ne vienne pas boucher le(s) trou(s) de la fibre en utilisant une colle suffisamment visqueuse. Par ailleurs, il est préférable d'utiliser une colle compatible avec le ou les liquides injectés dans la fibre. Comme indiqué précédemment il est en effet possible d'utiliser le connecteur proposé couplé à une fibre avec différents liquides.

L'intérêt d'utiliser une ferrule réside dans le fait de pouvoir utiliser différents types de ferrules servant d'adaptateur, par exemple de section sensiblement circulaire, présentant un même diamètre mais des canaux de dimensions différentes, afin de s'adapter à différents diamètres de fibre optique, tout en restant compatible avec des manchons de connecteur présentant un premier conduit de section et de dimension données. Ainsi, l'utilisation d'une ferrule dans ce deuxième mode de réalisation permet une meilleure manipulation de la fibre et une certaine uniformisation du reste du connecteur, car en choisissant des ferrules de même diamètre externe et de diamètre interne adaptés aux diamètres externes des différents types de fibres utilisées, on reporte l'éventuelle variabilité des diamètres de fibres au choix et au dimensionnement de la ferrule, le reste du connecteur étant réglé sur le diamètre externe fixé de la ferrule.

En référence à la figure 3b, la ferrule 44 (couplée à sa fibre 40) est ensuite fixée de façon hermétique dans le premier conduit 35 du manchon 32. Dans un mode de réalisation préféré, la ferrule 44 est insérée dans le premier conduit 35 du manchon 32 sur toute la longueur du premier conduit 35. Le diamètre intérieur du premier conduit 35 est de préférence adapté au diamètre externe de la ferrule 44 pour assurer le guidage et le maintien de la ferrule lors de son glissage à l'intérieur du premier conduit 35.

Toujours en référence à la figure 3b, les couplages entre la fibre 40 et la ferrule 44 d'une part, et la ferrule 44 et le premier conduit 35 du manchon 32 d'autre part, sont hermétiques, c'est-à-dire que l'espace entre l'enveloppe externe de la fibre 40 et le canal de la ferrule 44 d'une part, et l'espace entre l'enveloppe externe de la ferrule 44 et les parois du conduit 35 d'autre part, sont hermétiquement clos. Ces couplages hermétiques entre la fibre 40 et la ferrule 44 d'une part, et la ferrule 44 et le premier conduit 35 du manchon 32 d'autre part, peuvent être réalisés par tous moyens connus, et notamment par collage, comme indiqué ci-dessus.

Les autres caractéristiques du connecteur décrites dans le cadre du premier mode de réalisation, et notamment relatives au remplissage de liquide 43 et à l'injection d'une bulle 42 de gaz, peuvent être reprises dans le cadre d'une réalisation selon le deuxième mode décrit ci-dessus.

En particulier, le volume interne du manchon 32 défini par le deuxième conduit 36 est clos à l'extrémité correspondante du manchon par une fenêtre 33 qui assure l'étanchéité du montage et qui permet le couplage optique du connecteur avec une source de lumière. La fenêtre 33 peut être fixée hermétiquement au manchon par collage ou, en variante, par tous moyens de fixation hermétique connus en soi. Le manchon 32 présente aussi un troisième conduit 38 percé transversalement, qui s'étend de la paroi extérieure du manchon 32 à la paroi du deuxième conduit 36 à l'intérieur du manchon 32. Ce troisième conduit 38 est prévu comme conduit de remplissage du volume interne du connecteur 31 et du cœur de fibre optique 40 une fois celle-ci montée dans le connecteur 31 en utilisant la ferrule 44. On prévoit en outre de clore hermétiquement l'orifice externe de ce troisième conduit 38, prévu pour remplir la fonction d'orifice de remplissage, par un bouchon 39, afin de le fermer une fois la phase de remplissage du connecteur 31 terminée. Là encore, pour assurer une bonne étanchéité de la fermeture avec le bouchon, on peut prévoir un méplat réalisé sur la paroi externe du manchon au niveau de l'orifice de remplissage, dans le cas d'un manchon de coupe transversale incurvée au niveau de cet orifice.

Dans l'exemple non limitatif de la figure 3b, la fibre optique 40 est insérée dans le canal de la ferrule 44 sur une longueur excédant celle du canal, et la ferrule est insérée dans le premier conduit 35 sur toute la longueur de ce dernier, de sorte que l'extrémité de la fibre optique 40 vient s'insérer dans le volume interne du manchon défini par le deuxième conduit 36. La fibre 40 insérée dans le connecteur 31 est insérée sur une longueur n'excédant pas la longueur cumulée des premier et deuxième conduits, de sorte que l'extrémité de la fibre 40 insérée dans le connecteur 31 n'est pas en contact avec la paroi interne au connecteur de la fenêtre 33. Cela définit un espace 41, auquel il est ici fait référence sous le terme « interstice », dans le volume défini par le deuxième conduit 35, entre l'extrémité de la fibre 40 et la portion de surface de la paroi interne de la fenêtre 33 y faisant face.

En référence à la figure 3a, un décrochage 45 faisant butée lors de l'insertion de la ferrule 44 peut être prévu entre les premier 35 et deuxième 36 conduits, de manière à guider l'insertion de la ferrule 44 dans le manchon 32 du connecteur 31. Connaissant la longueur du deuxième conduit 36, on peut alors déterminer précisément la longueur de l'interstice 41 que l'on souhaite obtenir une fois la fibre montée, c'est-à-dire une fois la ferrule couplée à sa fibre insérée dans le premier conduit sur toute la longueur de ce dernier.

On peut ensuite effectuer le remplissage du connecteur 31, l'injection de la bulle de gaz 42, et le scellement du connecteur à l'aide du bouchon hermétique 39 comme expliqué ci-dessus dans le cadre du premier mode de réalisation.

On pourra par exemple choisir pour ce deuxième mode de réalisation un manchon 32 en verre, en métal ou en céramique, de longueur environ 1cm pour 4mm de diamètre externe, et une ferrule 44 en verre, en céramique ou en matériau composite, de longueur 13mm pour un diamètre externe de 2,5mm.

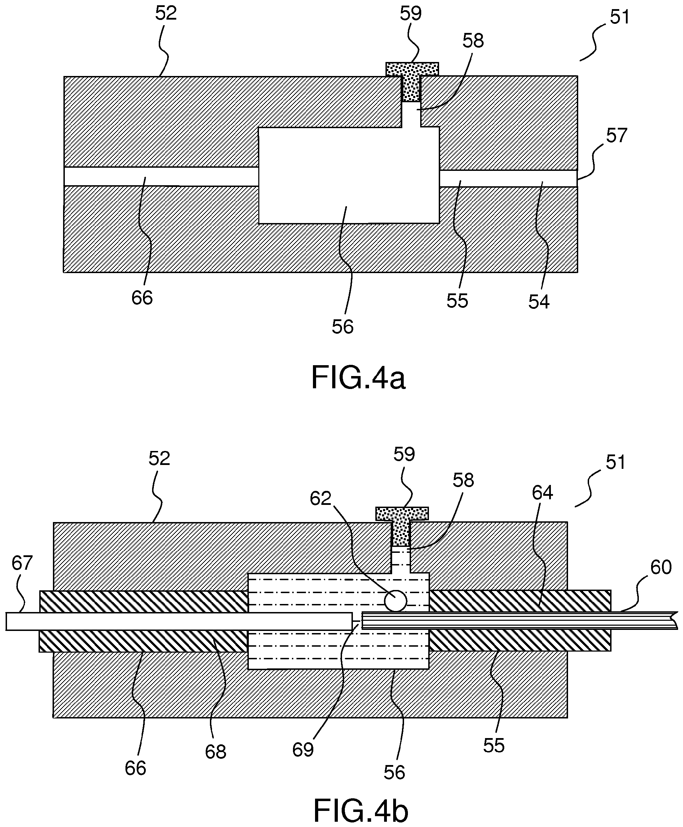

Les figures 4a et 4b illustrent une mise en œuvre du connecteur proposé selon un troisième mode de réalisation.

En référence à la figure 4a, le connecteur 51 proposé peut présenter une structure à double entrée en ce sens que le deuxième conduit 56 est prolongé par un quatrième conduit 66, de dimensions qui peuvent être similaires à celles du premier conduit 55. Le connecteur 51 peut comprendre un manchon 52 présentant une structure tubulaire comprenant un canal 54 traversant dans le sens de la longueur et résultant de trois conduits 55, 56, 66 formés à l'intérieur du manchon 52 superposés de manière à être communicants et former le canal 54 traversant le manchon. De préférence, les sections des premier 55 et quatrième 66 conduits sont de dimensions sensiblement identiques, étant donné qu'il est prévu d'insérer une fibre optique dans chacun d'eux. Dans ce mode de réalisation, la section du deuxième conduit sera choisie de dimensions sensiblement supérieures à celles des premier et quatrième conduits, étant donné que le volume défini par le deuxième conduit 56 a vocation à servir de réservoir de liquide contenant une bulle de gaz, et qu'un volume défini par le diamètre externe d'une fibre optique risquerait d'être insuffisant.

Toujours en référence à la figure 4a, les premier 55 et quatrième 66 conduits peuvent être formés de manière sensiblement coaxiale de sorte que les extrémités de fibre optique insérées dans ces conduits soient en vis-à-vis, l'une des fibres étant utilisée comme fibre d'accès générant un faisceau optique vers la deuxième fibre.

Ce mode de réalisation du connecteur proposé est applicable au cas où une seule fibre montée sur le connecteur est une fibre à cœur liquide, mais aussi au cas où les deux fibres montées sur le connecteur sont des fibres à cœur liquide.

Les premier 55 et quatrième 66 conduits peuvent être formés et/ou dimensionnés de manière à pouvoir insérer dans chacun de ces deux conduits une extrémité de fibre optique à laquelle il est prévu de coupler le connecteur 51. Pour le premier conduit 55 une extrémité de fibre optique à cœur creux est introduite par l'extrémité 57 correspondante du manchon 52 sur sensiblement toute la longueur du conduit 55. Pour le quatrième conduit 66 une extrémité de fibre optique (non nécessairement à cœur creux) est introduite par l'autre extrémité du manchon 52 sur sensiblement toute la longueur du conduit 66. Chacune des deux fibres optiques est couplée au connecteur 51, par le biais des premier 55 et quatrième 66 conduits, respectivement, de façon hermétique, c'est-à-dire que l'espace entre l'enveloppe externe de la fibre et les parois du conduit 55 et 66 dans lequel elle est insérée, est hermétiquement clos. Ce couplage hermétique entre chaque fibre et les premier 55 et quatrième 66 conduits du canal 54 peut être réalisé par tous moyens connus.

Dans ce troisième mode de réalisation, l'extrémité du deuxième conduit 56 opposée à celle communiquant avec le premier conduit 55 est fermée hermétiquement par le quatrième conduit 66, dans lequel il est prévu de monter une fibre optique de façon hermétique. Le deuxième conduit 56 présente une ouverture à ses deux extrémités, l'une communiquant avec le premier conduit 55, et l'autre communicant avec le quatrième conduit 66. Chacune de ces ouvertures est fermée hermétiquement une fois que des extrémités de fibre optique sont insérées de façon hermétique dans chacun des premier 55 et quatrième 66 conduits. En particulier, le connecteur 51 est muni de moyens de fermeture hermétique à l'extrémité du deuxième conduit 56 opposée à celle communiquant avec le premier conduit 55 comprenant le quatrième conduit 66 dans lequel est insérée de façon hermétique une fibre optique.

De manière similaire à ce qui a été décrit précédemment pour les premier et deuxième modes de réalisation, la paroi du manchon 52 est percée au-dessus du volume interne défini par le deuxième conduit 56, sur toute son épaisseur, de sorte que le manchon 52 présente en surface un orifice par lequel on peut remplir le connecteur 51 une fois la fibre optique montée. Le manchon 52 présente ainsi un troisième conduit 58 (qui n'est pas partie constituante du canal 54 traversant le manchon) percé transversalement, qui s'étend de la paroi extérieure du manchon 52 à la paroi du deuxième conduit 56 à l'intérieur du manchon 52. Ce troisième conduit 58 est prévu comme conduit de remplissage du volume interne du connecteur 51 et du cœur de fibre optique une fois celle-ci montée dans le premier conduit 55 du connecteur 51. On prévoit en outre de clore hermétiquement l'orifice externe de ce troisième conduit 58, prévu pour remplir la fonction d'orifice de remplissage, par un bouchon 59, afin de le fermer une fois la phase de remplissage du connecteur terminée. Pour assurer une bonne étanchéité de la fermeture avec le bouchon, on peut prévoir un méplat réalisé sur la paroi externe du manchon au niveau de l'orifice de remplissage, dans le cas d'un manchon de coupe transversale incurvée au niveau de cet orifice.

En référence à la figure 4b, la fibre optique à cœur creux 60 est insérée dans le premier conduit du connecteur 51 représenté sur la figure 4a, à ceci près que les fibres optiques sont représentées insérées par le biais d'une ferrule 64 et 68, conformément à la description correspondante pour le deuxième mode de réalisation. Le fonctionnement et la mise en œuvre du couplage connecteur/fibre à cœur creux sont conformes à la description précédente dans le cadre du deuxième mode de réalisation.

Le premier conduit 55 est donc dimensionné de manière à pouvoir y insérer une ferrule 64, dans laquelle l'extrémité de la fibre optique à cœur creux 60 a été insérée de façon hermétique, de manière à coupler la fibre optique 60 au connecteur 51. De même, le quatrième conduit 66 est dimensionné de manière à pouvoir y insérer une ferrule 68, dans laquelle l'extrémité d'une fibre optique 67 a été insérée de façon hermétique, de manière à coupler la fibre optique 67 au connecteur 51. Une fois la fibre optique 60 et 67 montée sur sa ferrule 64 et 68, la ferrule 64 et 68 est introduite par l'extrémité correspondante du manchon 52 sur sensiblement toute la longueur du premier conduit 55 et du quatrième conduit 66, respectivement.

Chaque ferrule 64 et 68 présente un canal sur toute sa longueur, destiné à accueillir une fibre optique de façon hermétique. On réalise ensuite un couplage hermétique entre la fibre 60 et 67, insérée dans le canal de sa ferrule 64 et 68, et la ferrule, par tous moyens connus.

En référence à la figure 4b, la ferrule 64 (couplée à sa fibre 60) est ensuite fixée de façon hermétique dans le premier conduit 55 du manchon 52. Dans un mode de réalisation préféré, la ferrule 64 est insérée dans le premier conduit 55 du manchon 52 sur toute la longueur du premier conduit 55. Le diamètre intérieur du premier conduit 55 est de préférence adapté au diamètre externe de la ferrule 64 pour assurer le guidage et le maintien de la ferrule lors de son glissage à l'intérieur du premier conduit 55. De même, la ferrule 68 couplée à sa fibre 67 est fixée de façon hermétique dans le quatrième conduit 66 du manchon 52.

Les couplages entre la fibre 60 et la ferrule 64 d'une part, et la ferrule 64 et le premier conduit 55 du manchon 52 d'autre part, sont hermétiques, c'est-à-dire que l'espace entre l'enveloppe externe de la fibre 60 et le canal de la ferrule 64 d'une part, et l'espace entre l'enveloppe externe de la ferrule 64 et les parois du conduit 55 d'autre part, sont hermétiquement clos. De même, les couplages entre la fibre 67 et la ferrule 68 d'une part, et la ferrule 68 et le quatrième conduit 66 du manchon 52 d'autre part, sont hermétiques. Ces couplages hermétiques peuvent être réalisés par tous moyens connus, et notamment par collage, comme indiqué ci-dessus.

Dans l'exemple non limitatif de la figure 4b, la fibre optique 60 est insérée dans le canal de la ferrule 64 sur une longueur excédant celle du canal, et la ferrule 64 est insérée dans le premier conduit 55 sur toute la longueur de ce dernier, de sorte que l'extrémité de la fibre optique 60 vient s'insérer dans le volume interne du manchon défini par le deuxième conduit 56. De même, la fibre optique 67 est insérée dans le canal de la ferrule 68 sur une longueur excédant celle du canal, et la ferrule 68 est insérée dans le quatrième conduit 66 sur toute la longueur de ce dernier, de sorte que l'extrémité de la fibre optique 67 vient s'insérer dans le volume interne du manchon défini par le deuxième conduit 56.

Aucune des fibres 60 et 67 n'est insérée dans le connecteur 51 sur une longueur excédant la longueur cumulée des premier et deuxième conduits, et des quatrième et deuxième conduits, respectivement. Les premiers et quatrième conduits représentés sur la figure 4b sont coaxiaux, de sorte que les extrémités des fibres 60 et 67 se font face, et les longueurs d'insertion des fibres au-delà des longueurs respectives des premier 55 et quatrième 66 conduits sont choisies de manière à laisser un espace 69 entre les extrémités des fibres 60 et 67 à l'intérieur du volume défini par le deuxième conduit 56.

Ainsi, les deux extrémités de fibre ne sont pas en contact l'une avec l'autre, l'espace 69 conservé entre elles servant à assurer l'accès du liquide aux trous de la fibre à cœur creux 60 lors de la phase de remplissage de cette fibre. De préférence, cet espace 69 sera cependant choisi aussi faible que possible (en tenant compte de la contrainte de remplissage évoquée ci-dessus) pour assurer un couplage optique optimal entre la fibre d'accès 67 et la fibre à cœur creux 60.

On peut ensuite effectuer le remplissage du connecteur 51, l'injection de la bulle de gaz 62, et le scellement du connecteur à l'aide du bouchon hermétique 59 comme expliqué ci-dessus dans le cadre du premier mode de réalisation.

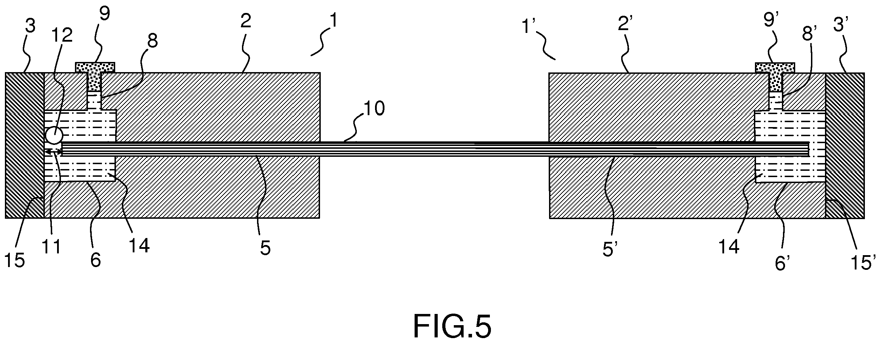

La figure 5 montre une variante du dispositif à fibre optique à cœur liquide selon la présente description et sa mise en œuvre.

Selon cette variante, chacune des extrémités d'une fibre à cœur liquide est insérée respectivement dans un connecteur, l'un au moins un correspondant à un dispositif de connexion selon la présente description.

En référence à la figure 5, les deux connecteurs sont respectivement numérotés 1 et 1'.

Le premier connecteur 1 comprend les éléments décrits dans la figure 1.

Le deuxième connecteur 1' comprend, dans cet exemple, des éléments similaires structurellement et fonctionnellement à celui du premier connecteur. Il comprend notamment un manchon 2' de structure tubulaire traversé par un canal comprenant une pluralité de conduits superposés en communication et agencé pour insérer la fibre optique 10, un premier conduit 5', un deuxième conduit 6', des moyens de fermeture 3' fermant hermétiquement l'extrémité du deuxième conduit 6', un troisième conduit 8' destiné au remplissage du volume intérieur du deuxième conduit, un bouchon de fermeture 9' hermétique et le liquide 14 contenu dans le deuxième conduit 6'.

Dans l'exemple non limitatif de la figure 5, une des extrémités de la fibre optique à cœur creux 10 est insérée dans le premier conduit 5 du premier connecteur 1 sur toute la longueur du premier conduit, de sorte que l'extrémité de la fibre optique vient s'insérer dans le deuxième conduit 6 du premier connecteur. La seconde extrémité de cette même fibre optique est insérée dans le premier conduit 5' d'un second connecteur 1' sur toute la longueur du premier conduit, de sorte que l'extrémité de la fibre optique vient s'insérer dans le volume interne défini comme le deuxième conduit 6' du deuxième connecteur.

On peut ensuite effectuer le remplissage du premier connecteur 1. Lorsqu'on injecte du liquide de remplissage par l'orifice externe du troisième conduit 8, le liquide 14 remplit tout d'abord la partie inférieure du volume du deuxième conduit 6, puis par capillarité le cœur de la fibre 10 en évacuant l'air présent dans le cœur de la fibre par l'autre extrémité de cette dernière se trouvant dans le deuxième connecteur non scellé, avant de remplir la partie supérieure du deuxième conduit 6 puis le troisième conduit 8. On procède ensuite à l'injection de la bulle 12 et au scellement du premier connecteur 1 à l'aide du bouchon hermétique 9 comme expliqué ci-dessus dans le premier mode de réalisation. Puis on peut effectuer le remplissage intégral du deuxième connecteur 1'.

En référence à la figure 5, aucune bulle n'est injectée dans le connecteur 1' et on scelle le connecteur 1' à l'aide du bouchon hermétique 9'. Dans un mode de procédé non représenté, après remplissage du deuxième connecteur 1', il est possible d'injecter une bulle dans le deuxième conduit 5' du deuxième connecteur puis de sceller le connecteur à l'aide d'un bouchon hermétique 9'.

Dans cette variante, les connecteurs peuvent correspondre par exemple au premier, deuxième ou troisième mode de réalisation.

En fonction du mode de réalisation choisi, certains actes, actions, évènements ou fonctions de chacune des méthodes décrites dans le présent document peuvent être effectués ou se produire selon un ordre différent de celui dans lequel ils ont été décrits, ou peuvent être ajoutés, fusionnés ou bien ne pas être effectués ou ne pas se produire, selon le cas. En outre, dans certains modes de réalisation, certains actes, actions ou évènements sont effectués ou se produisent concurremment et non pas successivement.

Bien que la connexion d'une fibre optique ait été décrite par rapport à un nombre limité de modes de réalisation, l'homme du métier ayant pris connaissance de la présente description peut se rendre compte que d'autres modes de réalisation peuvent être envisagés sans sortir du périmètre de la connexion de fibre optique tel que décrite dans les présentes. Le périmètre de la connexion de fibre optique n'est limité que par les revendications annexées.

## Revendications

1. Dispositif optique à fibre optique à cœur liquide, comprenant :
- au moins un premier dispositif de connexion (1) comprenant
un manchon (2) de structure tubulaire traversé par un canal comprenant une pluralité de conduits superposés en communication, un premier conduit (5) étant formé à partir d'une extrémité du manchon et étant agencé pour recevoir de façon hermétique à l'extrémité correspondante du manchon une extrémité de la fibre optique, et un deuxième conduit (6) étant formé communicant avec le premier conduit (5),
des moyens de fermeture (3) fermant hermétiquement l'extrémité du deuxième conduit (6) opposée à celle communiquant avec le premier conduit (5),
dans lequel le manchon (2) présente en outre un troisième conduit (8) destiné au remplissage du volume intérieur du deuxième conduit (6) lorsque celui-ci est fermé à une extrémité par les moyens de fermeture (3) et que la fibre est insérée dans le premier conduit (5), le troisième conduit (8) reliant transversalement l'extérieur du manchon à l'intérieur du deuxième conduit (6),
et un bouchon de fermeture (9) hermétique pour fermer hermétiquement l'orifice du troisième conduit débouchant sur l'extérieur du manchon
- ladite fibre optique (10), présentant un cœur rempli d'un liquide et une première extrémité insérée dans le premier dispositif de connexion (1),
ledit dispositif optique étant **caractérisé en ce que** le volume intérieur du deuxième conduit (6) du premier dispositif de connexion (1) comprend le liquide (14) et une bulle de gaz (12) d'une taille maximale telle qu'elle reste approximativement sphérique sous l'action de la tension superficielle lors des changements d'orientation du manchon (2) et qu'elle ne puisse pas recouvrir l'extrémité de la fibre, et **en ce que** le troisième conduit (8) du premier dispositif de connexion est fermé hermétiquement par le bouchon de fermeture (9).

2. Dispositif selon la revendication 1, dans lequel la longueur d'insertion de la fibre optique est supérieure à celle du premier conduit, de manière à traverser le premier conduit (5) et à pénétrer dans le deuxième conduit (6), sans entrer en contact avec le dispositif de fermeture (3) du premier dispositif de connexion (1).

3. Dispositif selon la revendication 2, dans lequel le diamètre de la bulle de gaz (12) est supérieur à la distance entre la première extrémité de la fibre optique (10) insérée dans le canal du manchon et le dispositif de fermeture du premier dispositif de connexion (3).

4. Dispositif selon l'une quelconque des revendications précédentes, dans lequel les moyens de fermeture (3) comprennent une fenêtre fermant hermétiquement le manchon (2) à son extrémité correspondant au deuxième conduit (6), la fenêtre permettant un couplage optique.

5. Dispositif selon l'une quelconque des revendications 1 à 3, dans lequel les moyens de fermeture (3) comprennent un quatrième conduit (66) superposé en communication avec le deuxième conduit (56) dans le canal du manchon, formé à partir de l'autre extrémité du manchon et agencé pour recevoir de façon hermétique à l'extrémité correspondante du manchon une extrémité d'une fibre optique, dans lequel les premier (55) et quatrième conduits (66) sont coaxiaux, et dans lequel les moyens de fermeture comprennent en outre une extrémité de fibre optique (67) insérée dans le quatrième conduit (66) de façon hermétique.

6. Dispositif selon l'une quelconque des revendications précédentes, dans lequel le premier dispositif de connexion (31) comprend en outre une ferrule (44) présentant sur toute sa longueur un canal agencé pour recevoir de façon hermétique, une première extrémité de la fibre optique (40), et dans lequel le premier conduit (35) est agencé pour recevoir la ferrule (44) de façon hermétique à l'extrémité correspondante du manchon.

7. Dispositif selon la revendication 6, dans lequel les premier (35) et second conduits (36) sont coaxiaux et de même diamètre, et dans lequel la ferrule (44) a un diamètre correspondant à celui des premier et second conduits pour être insérée de façon hermétique sur toute sa longueur dans le premier conduit (35).

8. Dispositif selon l'une quelconque des revendications précédentes comprenant en outre un second dispositif de connexion (1') dans lequel est insérée une seconde extrémité de la fibre optique à cœur liquide (10).

9. Dispositif selon la revendication 8 dans lequel les premier (1) et second dispositifs de connexions (1') sont identiques.

10. Procédé de réalisation d'un dispositif optique à fibre optique à cœur liquide selon l'une quelconque des revendications précédentes, comprenant :
- l'insertion d'une première extrémité d'une fibre optique à cœur liquide (10) de façon hermétique dans le premier conduit (5) du manchon (2) du premier dispositif de connexion (1) sur une longueur inférieure à la longueur cumulée des premier et deuxième conduits;
- le remplissage du volume intérieur du manchon du premier dispositif de connexion (1) constitué par les deuxième (6) et troisième conduits (8) par l'orifice externe du troisième conduit avec un liquide (14) prévu pour remplir le cœur de la fibre optique ; et
- la fermeture après remplissage de l'orifice du troisième conduit de manière à injecter dans le volume intérieur une bulle de gaz d'une taille maximale telle qu'elle reste approximativement sphérique sous l'action de la tension superficielle lors des changements d'orientation du manchon (2) et qu'elle ne puisse pas recouvrir l'extrémité de la fibre .

11. Procédé selon la revendication 10, dans lequel le remplissage du volume intérieur du manchon du premier dispositif de connexion est partiel, et l'injection de la bulle de gaz est effectuée par fermeture de l'orifice externe du troisième conduit (8) avec le bouchon de fermeture (9).

12. Procédé selon la revendication 11, dans lequel on détermine un niveau de remplissage partiel du volume intérieur du manchon du dispositif de connexion, et dans lequel on utilise un bouchon de fermeture (9) de longueur prédéterminée d'obturation du troisième conduit (8) de manière à injecter dans le volume intérieur, lors de la fermeture de l'orifice externe du troisième conduit (8) avec le bouchon de fermeture (9), une bulle de gaz (12) de volume prédéterminé.

13. Procédé selon la revendication 11, dans lequel le remplissage partiel du volume intérieur du dispositif de connexion est effectué jusqu'à un niveau prédéterminé correspondant à un volume prédéterminé de la bulle de gaz (12) injectée dans le volume intérieur lors de la fermeture de l'orifice externe du troisième conduit (8).

14. Procédé selon l'une quelconque des revendications 10 à 13, dans lequel la fibre optique (10) est insérée dans le manchon sur une longueur supérieure à celle du premier conduit (5), de manière à traverser le premier conduit (5) et à pénétrer dans le deuxième conduit (6), sans entrer en contact avec le dispositif de fermeture (3) du dispositif de connexion.

15. Procédé selon l'une quelconque des revendications 10 à 14, dans lequel l'injection de la bulle de gaz (12) est effectuée de manière à injecter une bulle de gaz de diamètre supérieur à la distance entre l'extrémité de la fibre optique (10) insérée dans le canal du manchon et le dispositif de fermeture (3) du dispositif de connexion.

16. Procédé selon l'une quelconque des revendications 10 à 15, dans lequel les extrémités d'une fibre optique à cœur liquide (10) sont insérées respectivement dans le premier dispositif de connexion (1) et dans un second dispositif de connexion (1').

## Patentansprüche

1. Faseroptische Vorrichtung mit Flüssigkern, die Folgendes umfasst:
- mindestens eine erste Verbindungsvorrichtung (1), die Folgendes umfasst:
eine Muffe (2) mit rohrförmiger Struktur, die von einem Kanal durchquert wird, der eine Mehrzahl von in Kommunikation überlagerten Leitungen umfasst, wobei eine erste Leitung (5) von einem Ende der Muffe gebildet wird und zum hermetisch dichten Aufnehmen eines Endes der optischen Faser am entsprechenden Ende der Muffe angeordnet ist, und wobei eine zweite Leitung (6) in Kommunikation mit der ersten Leitung (5) ausgebildet ist,
Verschlussmittel (3), die das Ende des zweiten Kanals (6) gegenüber dem hermetisch abdichten, das dem gegenüber liegt, das mit der ersten Leitung (5) in Kommunikation ist,
wobei die Muffe (2) ferner eine dritte Leitung (8) zum Füllen des Innenvolumens der zweiten Leitung (6) aufweist, wenn diese an einem Ende mit den Verschlussmitteln (3) verschlossen ist und die Faser in die erste Leitung (5) eingeführt wird, wobei die dritte Leitung (8) das Äußere der Muffe transversal mit dem Inneren der zweiten Leitung (6) verbindet,
und einen hermetischen Verschlussstopfen (9) zum hermetisch dichten Verschließen der Öffnung der dritten Leitung, die zur Außenseite der Muffe mündet,
- wobei die optische Faser (10) einen mit einer Flüssigkeit gefüllten Kern und ein erstes Ende aufweist, das in die erste Verbindungsvorrichtung (1) eingeführt ist,
wobei die optische Vorrichtung **dadurch gekennzeichnet ist, dass** das Innenvolumen der zweiten Leitung (6) der ersten Verbindungsvorrichtung (1) die Flüssigkeit (14) und eine Gasblase (12) mit einer maximalen Größe aufweist, so dass sie unter der Wirkung der Oberflächenspannung bei Orientierungsänderungen der Muffe (2) annähernd kugelförmig bleibt und das Ende der Faser nicht bedecken kann, und dadurch, dass die dritte Leitung (8) der ersten Verbindungsvorrichtung durch den Verschlussstopfen (9) hermetisch verschlossen wird.

2. Vorrichtung nach Anspruch 1, wobei die Einführungslänge der optischen Faser größer als die der ersten Leitung ist, so dass sie die erste Leitung (5) durchläuft und in die zweite Leitung (6) eindringt, ohne mit der Verschlussvorrichtung (3) der ersten Verbindungsvorrichtung (1) in Kontakt zu kommen.

3. Vorrichtung nach Anspruch 2, wobei der Durchmesser der Gasblase (12) größer ist als der Abstand zwischen dem ersten Ende der in den Kanal der Muffe eingeführten optischen Faser (10) und der Verschlussvorrichtung der ersten Verbindungsvorrichtung (3).

4. Vorrichtung nach einem der vorherigen Ansprüche, wobei die Verschlussmittel (3) ein Fenster aufweisen, das die Muffe (2) an ihrem der zweiten Leitung (6) entsprechenden Ende hermetisch verschließt, wobei das Fenster eine optische Kopplung ermöglicht.

5. Vorrichtung nach einem der Ansprüche 1 bis 3, wobei die Verschlussmittel (3) eine vierte Leitung (66) umfassen, die in Kommunikation mit der zweiten Leitung (56) im Kanal der Muffe überlagert ist, gebildet vom anderen Ende der Muffe und so ausgelegt, dass sie ein Ende einer optischen Faser hermetisch dicht am entsprechenden Ende der Muffe aufnimmt, wobei die erste (55) und die vierte Leitung (66) koaxial sind und wobei die Verschlussmittel ferner ein optisches Faserende (67) umfassen, das hermetisch dicht in die vierte Leitung (66) eingeführt wird.

6. Vorrichtung nach einem der vorherigen Ansprüche, wobei die erste Verbindungsvorrichtung (31) ferner eine Hülse (44) umfasst, die über ihre gesamte Länge einen Kanal aufweist, der so ausgelegt ist, dass sie ein erstes Ende der optischen Faser (40) hermetisch dicht aufnimmt, und wobei die erste Leitung (35) so angeordnet ist, dass sie die Hülse (44) am entsprechenden Ende der Muffe hermetisch dicht aufnimmt.

7. Vorrichtung nach Anspruch 6, wobei die erste (35) und die zweite (36) Leitung koaxial sind und den gleichen Durchmesser haben und wobei die Hülse (44) einen Durchmesser hat, der dem der ersten und der zweiten Leitung entspricht, um über ihre gesamte Länge hermetisch dicht in die erste Leitung (35) eingeführt zu werden.

8. Vorrichtung nach einem der vorherigen Ansprüche, die ferner eine zweite Verbindungsvorrichtung (1') aufweist, in die ein zweites Ende der optischen Faser (10) mit Flüssigkern eingeführt ist.

9. Vorrichtung nach Anspruch 8, wobei die erste (1) und die zweite Verbindungsvorrichtung (1') identisch sind.

10. Verfahren zur Herstellung einer faseroptischen Vorrichtung mit Flüssigkern nach einem der vorherigen Ansprüche, das Folgendes beinhaltet:
- Einführen eines ersten Endes einer optischen Faser (10) mit Flüssigkern hermetisch dicht in die erste Leitung (5) der Muffe (2) der ersten Verbindungsvorrichtung (1) über eine Länge, die kleiner als die Gesamtlänge der ersten und zweiten Leitung ist;
- Füllen des Innenvolumens der Muffe der ersten Verbindungsvorrichtung (1), die von der zweiten (6) und dritten (8) Leitung gebildet wird, durch die äußere Öffnung der dritten Leitung mit einer Flüssigkeit (14) zum Füllen des Kerns der optischen Faser; und
- Verschließen der Öffnung der dritten Leitung nach dem Füllen, um in das Innenvolumen eine Gasblase von einer solchen maximalen Größe zu injizieren, dass sie unter der Wirkung der Oberflächenspannung bei Orientierungsänderungen der Muffe (2) annähernd kugelförmig bleibt und sie das Ende der Faser nicht bedecken kann.

11. Verfahren nach Anspruch 10, wobei des Innenvolumens der Muffe der ersten Verbindungsvorrichtung nur teilweise gefüllt ist und das Injizieren der Gasblase durch Verschließen der äußeren Öffnung der dritten Leitung (8) mit dem Verschlussstopfen (9) erfolgt.

12. Verfahren nach Anspruch 11, wobei ein Teilfüllstand des Innenvolumens der Muffe der Verbindungsvorrichtung bestimmt wird und wobei ein Verschlussstopfen (9) einer vorbestimmten Länge zum Verschließen der dritten Leitung (8) benutzt wird, um beim Verschließen der äußeren Öffnung der dritten Leitung (8) mit der Verschlusskappe (9) eine Gasblase (12) mit vorbestimmtem Volumen in das Innenvolumen zu injizieren.

13. Verfahren nach Anspruch 11, wobei das teilweise Füllen des Innenvolumens der Verbindungsvorrichtung bis zu einem vorbestimmten Pegel entsprechend einem vorbestimmten Volumen der Gasblase (12) erfolgt, die beim Verschließen der äußeren Öffnung der dritten Leitung (8) in das Innenvolumen injiziert wird.

14. Verfahren nach einem der Ansprüche 10 bis 13, wobei die optische Faser (10) in die Muffe über eine Länge eingeführt wird, die größer als die der ersten Leitung (5) ist, um die erste Leitung (5) zu durchlaufen und in die zweite Leitung (6) einzudringen, ohne mit der Verschlussvorrichtung (3) der Verbindungsvorrichtung in Kontakt zu kommen.

15. Verfahren nach einem der Ansprüche 10 bis 14, wobei die Injektion der Gasblase (12) so erfolgt, dass eine Gasblase mit einem Durchmesser injiziert wird, der größer ist als der Abstand zwischen dem Ende der in den Kanal der Muffe eingeführten optischen Faser (10) und der Verschlussvorrichtung (3) der Verbindungsvorrichtung.

16. Verfahren nach einem der Ansprüche 10 bis 15, wobei die Enden einer optischen Faser (10) mit Flüssigkern in die erste Verbindungsvorrichtung (1) bzw. in eine zweite Verbindungsvorrichtung (1') eingeführt werden.

## Claims

1. An optical device having liquid-core optical fiber, comprising:
- at least one first connecting device (1) comprising:
a sleeve (2) of tubular structure through which a channel comprising a plurality of superposed and communicating ducts passes, a first duct (5) being formed from one end of the sleeve and being arranged to receive hermetically at the corresponding end of the sleeve one end of the optical fiber, and a second duct (6) being formed communicating with the first duct (5);
closing means (3) hermetically closing the end of the second duct (6) which is opposite the end communicating with the first duct (5),
wherein the sleeve (2) furthermore contains a third duct (8) intended for filling the interior volume of the second duct (6) when the latter is closed at one end by the closing device (3) and the fiber is inserted into the first duct (5), the third duct (8) connecting transversely the exterior of the sleeve to the interior of the second duct (6);
and a hermetic closing cap (9) for hermetically closing the orifice of the third duct opening onto the exterior of the sleeve;
- said optical fiber (10) having a liquid core and a first end inserted into the first connecting device (1),
wherein said optical device is **characterized in that** the interior volume of the second duct (6) of the first connecting device (1) comprises the liquid (14) and a gas bubble (12) of a maximal size such that it remains approximately spherical under the action of surface tension during the orientation shifts of the sleeve (2) and such that it cannot cover the end of the sleeve, and **in that** the third duct (8) of the first connecting device is hermetically closed by the closing cap (9).

2. The device according to claim 1, wherein the insertion length of the optical fiber is longer than the length of the first duct, so as to pass through the first duct (5) and penetrate into the second duct (6), without making contact with the closing device (3) of the first connecting device (1).

3. The device according to claim 2, wherein the diameter of the gas bubble (12) is larger than the distance between the first end of the optical fiber (10) inserted into the channel of the sleeve and the closing device of the first connecting device (3).

4. The device according to any of the preceding claims, wherein the closing means (3) comprise a window hermetically closing the sleeve (2) at its end corresponding to the second duct (6), the window enabling optical coupling.

5. The device according to claims 1 to 3, wherein the closing means (3) comprise a fourth duct (66) superposed in communication with the second duct (56) in the channel of the sleeve, formed from the other end of the sleeve and arranged to receive hermetically at the corresponding end of the sleeve one end of an optical fiber, wherein the first and fourth ducts are coaxial, and wherein the closing means furthermore comprise an end of an optical fiber (67) hermetically inserted into the fourth duct (66).

6. The device according to any of the preceding claims, wherein the first connecting device further comprises a ferule (44) containing over its entire length a channel arranged to receive hermetically a first end of the optical fiber (40), and wherein the first duct (35) is arranged to receive the ferule (44) hermetically at the corresponding end of the sleeve.

7. The device according to claim 6, wherein the first (35) and second (36) ducts are coaxial and of the same diameter, and wherein the ferule (44) has a diameter corresponding to that of the first and second ducts in order to be inserted hermetically over its entire length into the first duct (35).

8. The device according to any of the preceding claims, furthermore comprising a second connecting device (1') into which a second end of the liquid-core optical fiber (10) is inserted.

9. The device according to claim 8, wherein the first (1) and second connecting devices (1') are identical.

10. A method for producing an optical device having liquid-core optical fiber according to any of the preceding claims, the method comprising:
- inserting a first end of a liquid-core optical fiber (10) hermetically into the first duct (5) of the sleeve (2) of the first connecting device (1) over a length smaller than the cumulative length of the first and second ducts;
- filling the interior volume of the sleeve of the first connecting device (1) made up of the second (6) and third (8) ducts via the external orifice of the third duct with a liquid (14) provided to fill the core of the optical fiber; and
- closing, after the filling has ended, the orifice of the third duct so as to inject into the interior volume a gas bubble of a maximal size such that it remains approximately spherical under the action of surface tension during orientation shifts of the sleeve (2) and such that it cannot cover the end of the sleeve.

11. The method according to claim 10, wherein the interior volume of the sleeve of the first connecting device is only partially filled, and the gas bubble is injected by closing the external orifice of the third duct (8) with the closing cap (9).

12. The method according to claim 11, wherein a level of partial filling of the interior volume of the sleeve of the connecting device is determined, and in which a closing cap (9) of preset length is used to plug the third duct (8) so as to inject, into the interior volume, when the external orifice of the third duct (8) is closed with the closing cap (9), a gas bubble (12) of preset volume.

13. The method according to claim 11, wherein the interior volume of the connecting device is partially filled to a preset level corresponding to a preset volume of the gas bubble (12) injected into the interior volume when the external orifice of the third duct (8) is closed.

14. The method according to one of claims 10 to 13, wherein the optical fiber (10) is inserted into the sleeve over a length longer than that of the first duct (5), so as to pass through the first duct (5) and penetrate into the second duct (6), without making contact with the closing device (3) of the connecting device.

15. The method according to one of claims 10 to 14, wherein the gas bubble (12) is injected so as to inject a gas bubble of a diameter larger than the distance between the end of the optical fiber (10) inserted into the channel of the sleeve and the closing device (3) of the connecting device.

16. The method according to one of claims 10 to 15, wherein the ends of a liquid-core optical fiber (10) are inserted respectively into the first connecting device (1) and into a second connecting device (1').
